# EUROPEAN PATENT SPECIFICATION

(11) **EP 4 247 894 B1**
(45) Date of publication and mention of the grant of the patent: **21.10.2026**
(21) Application number: 21844081.6
(22) Date of filing: 15.11.2021
(51) Int. Cl.: C08L 67/06

(54) **THERMOSET POLYESTER BMC FORMULA FOR DIRECT METALLIZED FORWARD LIGHTING REFLECTOR**
DUROPLASTISCHE POLYESTER-BMC-FORMULIERUNG FÜR DIREKT METALLISIERTEN VORWÄRTSBELEUCHTUNGSREFLEKTOR
FORMULE DE CMO DE POLYESTER THERMODURCISSABLE POUR RÉFLECTEUR D'ÉCLAIRAGE AVANT MÉTALLISÉ DIRECT

(30) Priority: 23.11.2020 US 202063117100 P
(43) Date of publication of application: 27.09.2023
(73) Proprietor: LyondellBasell Advanced Polymers Inc., Houston, TX 77056 (US)
(72) Inventor: RIDDLE, Jody D., Houston, TX 77056 (US); DANIELSON, Jeffery Scott, Houston, TX 77056 (US)
(74) Representative: LyondellBasell
(86) International application number: PCT/US2021/059394
(87) International publication number: WO 2022/108878

(56) References cited:
- EP-A1- 0 552 789
- EP-A2- 0 790 115
- EP-A2- 0 838 502
- WO-A1-03/055946
- WO-A1-2019/023301

## Description

### FIELD OF THE DISCLOSURE

The disclosure relates to polyester compositions for molded articles, particularly for automotive applications.

### BACKGROUND OF THE DISCLOSURE

The automotive industry has long since incorporated polymer-based automotive parts such as bumpers, grilles, exterior door panels and trims, interior panels and trims, and facia. Many of these polymer-based parts replace metals that were easily dented, and subject to corrosion and rapid deterioration by weathering. While the initial motivation was to lighten the weight of an automotive vehicle for the purpose of improving fuel economy and improve durability, reductions in material and labor costs were also realized. With improvements in polymer compositions and molding processes, many functional and decorative parts can now be molded for distinctive styling and high class performance.

Thermoplastic, in particular, have enjoyed wide commercial success in the automotive industry because of their outstanding performance and cost characteristics. Because of their impact resistance, ability to be molded in-color, and ability to withstand weather extremes, blends of thermoplastic polyolefins (TPO) have found use in injection molded structures, particularly those in the automotive industry such as grilles, bumpers, spoilers, fascias, and interior panels for automotives, airplanes, and recreational vehicles, as well as other components for water vessels and locomotives.

In recent years, there has been a trend towards incorporating lightweight but higher cost, high performance engineering thermoplastics as well. Polyetherimide, for example, has been used to form electrical components due to its non-burning characteristics, high heat resistance, and a dielectric strength. Likewise, high heat polycarbonate (390PC) has found applications as electrical connectors and electronic housing.

A critical problem perceived by the automobile manufacturers the use of thermoplastics on automobiles and other vehicles is the difficulties encountered molding articles within a narrow specification that will not deform or creep over time, thus altering the shape. For some automotive parts, this deformation merely affects the aesthetics of the automobile. For other parts, the deformation affects functionality, potentially leading to a far more dangerous situation than the aesthetics.

Deviates from the molded specifications is especially problematic for articles used in high heat applications such as headlamps. Automotive headlamps require fine optical reflectors to accurately and efficiently reflect the available light onto the road, and must comply with stringent federal regulations. If a headlamp should deform, the headlamp beam and the way light is reflected and distributed in front of the automobile can create a dangerous and unsafe condition.

High quality reflectors on the headlamps have been made from pure resins, particularly, high cost resins such as polycarbonates, polyether-imide, polyphthalate-carbonate, polyarylsulfone, and other high performance engineering thermoplastics. Headlamps and reflectors molded from these resins can then be metallized, for example by vapor deposition or sputtering of aluminum, to achieve the desired reflective quality in compliance with federal regulations. Although not strictly necessary, the reflective metallic coating can also be coated with a protective sealer such as silicon monoxide to limit or stop water or other materials from tarnishing the mirror surface.

There is considerable competition between materials in the automotive market as the manufacturers try to incorporate lighter, better performing, and lower cost materials, especially for headlamp assemblies. To avoid the use of high cost pure resin thermoplastics and increase long-term stability, automotive manufacturers have turned to thermoset polymer-based compositions. A thermoset polymer is irreversibly hardened by curing using heat or radiation. The curing process initiates chemical reactions within the thermoset polymer composition that create extensive covalent crosslinking between polymer chains to produce an infusible and insoluble polymer network. Thermosetting compositions are stronger than thermoplastic composition due to the three-dimensional network of crosslinking bonds and are also better suited to high-temperature applications since they keep their shape as strong covalent bonds between polymer chains cannot be broken easily.

Automotive manufacturers have begun molding headlamps and reflectors from thermoset bulk molding compounds (BMC). BMCs are polymeric resins filled with glass fibers and other less expensive filler materials such as talc, calcium carbonate, and mica. The glass fiber improves the strength of the resin and the filler materials lower the overall cost of the headlamp/reflector while improving dimensional stability. Head lamps with a BMC component have been disclosed, for example, in EP 0 790 115 A2 and EP 0 838 502 A2.

Unfortunately, the fibers and fillers can appear at the surface of the headlamp, causing a rough, pitted or otherwise irregular surface. If the rough surface for the reflector region is metallized directly, the resulting reflector can be hazy, pitted, and otherwise irregular. This results in a substantial portion of the reflected light being lost, or misdirected. Thus, the reflective regions of the headlamp are frequently coated with a liquid base coat to impart a very high degree of smoothness. These smoothing materials, such as an acrylic urethane, flow over and fill in the crevices in the surface of the headlamp.

The base coating material is expensive and difficult to properly apply. Further, pits in the reflector region can be filled by the base coating material, but only dried to have surface skin. The interior liquid can then erupt during evacuation, leaving a surface hole, and splattered material in the equipment. The base coating can also be an environmentally offensive material.

Therefore, there is a continuing need to develop compositions that, as-molded, provide a low profile surface sufficient to accept direct metallization, yielding a highly reflective surface with little or no surface glare or haze. These compositions should have the durability, high heat resistance, and deformation resistance needed for automotive applications, while reducing the cost and time for manufacturing the final molded component.

### SUMMARY OF THE DISCLOSURE

The present disclosure is directed to new thermoset polyester-based bulk molding compounds (BMC) as described in claim 1 that address the need for smooth, high gloss molded automotive parts that can be metallized directly, while retaining the low shrinkage, strength, durability, and dimensional stability needed by the automotive industry. The new BMC composition also have a quicker manufacturing time due to faster molding processes and the eliminated base coat application before metallization. Methods of forming articles from such BMC compositions, and applying metallic layers and sealants to impart reflective properties are also described.

The present disclosure includes any of the following embodiments in any combination(s) of one or more thereof:

A bulk molding compound (BMC) composition according to claims 1-6 having a polyester resin system, a curing package; and, an additive package comprising moisture absorbing components. The BMC can have a plasticity between 1 and 6 seconds at a pressure of (~0.62 MPa) or between 2 and 8 seconds at a pressure of 48 psi (~0.33 MPa).

Any of the above compositions, wherein the polyester resin system is present in an amount between 10 wt. % and 30 wt. % based on the total weight of the composition.

Any of the above compositions, wherein the curing package is present in an amount between greater than 0 wt. % and 1.1 wt. % based on the total weight of the composition.

Any of the above compositions, wherein the additive package is present in an amount between greater than 0 wt. % and 70 wt. % based on the total weight of the composition.

A bulk molding compound (BMC) composition as described in claims 1-6 comprising (a) a polyester resin system, wherein the total amount of the polyester resin system in the BMC composition ranges from 10 wt. % to 60 wt. %, or 10 and 40 wt. %, or 35 and 60 wt. %, or 25 and 50 wt. %, or 30 wt. %, based on a total weight of the BMC composition; (b) a curing package, wherein the total amount of the curing package in the BMC composition ranges from greater than 0 wt. % to 1.1 wt. %, or greater than 0 wt. % and 0.75 wt. %, or 0.5 and 1.1 wt. %, or 0.4 to 0.43 wt. %, or based on a total weight of the BMC composition; (c) an additive package, wherein the total amount of the additive package in the BMC composition ranges from greater than 0 wt. % to 80 wt. %, or greater than 0 wt. % and 40 wt. %, or 35 and 80 wt. %, or between 45 and 70 wt. %, based on a total weight of the BMC composition. The BMC can have a plasticity between 1 and 6 seconds, or 1 to 4 seconds, or 3.5 to 6 seconds, at a pressure of 90 psi (~0.62 MPa); or, the plasticity is between 2 and 8 seconds, or 2 to 5 seconds, or 4 to 8 seconds, at a pressure of 48 psi (~0.33 MPa). An article formed from the BMC can have a gloss of at least 85 GU, or at least 100 GU, measured at 60° (ASTM D 2457) and a linear shrinkage between -0.4 and 0.8%.

A bulk molding compound (BMC) composition as described in claims 1-6 wherein the total amount of the polyester resin composition present ranges from 10 wt. % to 30 wt. %, based on a total weight of the BMC composition; (b) a curing package comprising an inhibitor, initiator and accelerator, wherein the total amount of the curing package present ranges from greater than 0 wt. % to 1.1 wt. %, based on a total weight of the BMC composition; (c) an additive package comprising moisture absorbing components, particle fillers, reinforcing glass fiber fillers, a mold release agent, and a thickener, wherein the total amount of the additive package present ranges from greater than 0 wt. % to 70 wt. %, based on a total weight of the BMC composition. The BMC can have a plasticity between 1 and 6 seconds at a pressure of 90 psi (~0.62 MPa) or between 2 and 8 seconds at a pressure of 48 psi (~0.33 MPa).

Any of the above compositions, wherein the plasticity between 1 and 4 seconds at a pressure of 90 psi (~0.62 MPa).

Any of the above compositions, wherein the plasticity between 3.5 and 6 seconds at a pressure of 90 psi (~0.62 MPa).

An article formed from any of the above compositions, wherein the article is part of an automobile. Alternatively, an article formed from any of the above compositions, wherein the article may be used as parts for water vessels, locomotives, recreational vehicles, industrial vehicles, material handling vehicles, or airplanes.

An article formed from any of the above compositions, wherein the article has a gloss of at least 85 GU measured at 60° (ASTM D 2457) and a linear shrinkage between -0.4 and 0.8%. Alternatively, the article has a gloss of at least 100 GU measured at 60° (ASTM D 2457).

An article formed from any of the above compositions, wherein the article is a headlamp housing for a headlight assembly. The headlamp housing article has a gloss of at least 100 GU measured at 60°. Alternatively, a headlamp housing formed from any of the above compositions, wherein the headlamp housing is part of a headlight assembly for an automobile and is metallized directly without an intermediate layer or base coat to form a reflective region on the headlamp housing.

Any of the above articles or headlamp housings can be formed using known methods of molding and curing, including injection molding or injection compression molding (ICM). In some embodiments, high mold temperatures and/or high injection speeds are used in the molding process. In some embodiments, the injection speed is 2 seconds or less.

Once any of the above articles are formed, a metallic layer can be applied directly to the surface of the article to impart a reflective quality (light output) of at least 80%. The metallized surface of the article also has minimal visible haze or surface glare. Any known method of metallizing the outer layer of the molded article or headlamp housing can be used, including vapor deposition or sputtering of a metal such as aluminum on the surface of interest. In some embodiments, the reflective layer on the article directs the light within specific controlled parameters that are in compliance with 49 C.F.R. § 571.108 (FMVSS 108). The entire surface or a portion of the surface of the article or headlamp housing can be metallized directly.

A method of forming a headlamp housing with a reflector region by first blending a BMC composition as described in claims 1-6. The blended BMC composition is then injected into a mold, wherein the blended composition is molded and cured to form a headlamp housing. The molded headlamp housing has a flexural strength of at least 75 MPa, and a linear shrinkage between -0.4% and 0.8%. Further, the headlamp housing defines an internal cavity, wherein the internal cavity has a gloss measured at 60° (ASTM D 2457) of greater than 85 GU. At least a portion of the internal cavity is then metallized directly to form a headlamp reflector region, wherein the light output of the headlamp reflector region is at least 80%. Alternatively, the internal cavity has a gloss of at least 100 GU measured at 60° and the headlamp reflector region has a reflectance of at least 85%. The headlamp housing with a reflector region can then be used in a headlight assembly.

Any of the above methods, wherein the mold is highly polished and chrome plated.

Any of the above methods, wherein the temperature of the mold during the molding and curing step is between 300°F (~148°C) and 425°F (~218°C).

Any of the above methods, wherein the molding step is an injection molding or an injection compression molding (ICM).

Any of the above methods, wherein the metallizing step uses aluminum metal.

Any of the above methods of forming the articles including the step of applying any known protective coating to seal the metallized molded article or headlamp housing to prevent tarnishing or injury to the metallic, reflective layer. Alternatively, any of the above articles having a protective coating over the metallized area of the article.

Any of the above compositions, articles, or methods, wherein the moisture adsorbing component is selected from a group consisting of molecular sieves, silica gel, activated charcoal, calcium sulfate, and calcium chloride. Alternatively, the moisture adsorbing component are molecular sieves such as aluminosilicates-based zeolites.

Any of the above compositions, articles, or methods, wherein the moisture adsorbing component are alkali metal aluminosilicates molecular sieves that have a Type A crystal structure and pore openings that are 0.3 nm in diameter.

Any of the above compositions, articles, or methods, wherein the curing package has an inhibitor, initiator and accelerator.

Any of the above compositions, articles, or methods, wherein the inhibitor is selected from a group consisting of para-benzoquinone, hydroquinone, toluhydroquinone, chloranil, or mono-tert-butylhydroquinone.

Any of the above compositions, articles, or methods, wherein the initiator is an organic peroxide.

Any of the above compositions, articles, or methods, wherein the accelerator is an organo-metallic compound.

Any of the above compositions, articles, or methods, wherein the curing package has para-benzoquinone as the inhibitor, di(tert-butylperoxyisopropyl)benzene as the initiator, and cobaltic acetylacetonate as the accelerator.

Any of the above compositions, articles, or methods, wherein the additive package further has one or more particle fillers, one or more reinforcing glass fibers fillers, an internal mold release agent, and a thickening agent.

Any of the above compositions, articles, or methods, wherein the particle fillers comprise a calcium carbonate having different particle sizes.

Any of the above compositions, articles, or methods, wherein the particle fillers comprise a calcium carbonate with an average particle size of 2 microns or less, a calcium carbonate with an average particle size of 3 microns or more, and a ground glass with a particle size between 80 ( 177 microns) and 170 mesh ( 88 microns) on the US Sieve Series Scale.

Any of the above compositions, articles, or methods, wherein the reinforcing glass fiber fillers are chopped strand fiberglass with lengths between 1/64 inch (~0.04 cm) to 1 inch (~2.54 cm). Alternatively, the reinforcing glass fiber fillers are a mixture of chopped glass fibers with a length of 0.25 (~ 0.635 cm) inch and a length of 0.125 inch (~0.3175 cm).

This summary is provided to introduce a selection of concepts that are further described below in the detailed description. This summary is not intended to identify key or essential features of the claimed subject matter, nor is it intended to be used as an aid in limiting the scope of the claimed subject matter.

### BRIEF DESCRIPTION OF THE DRAWINGS

FIG. 1A displays a cross section of prior art headlamp assembly.
FIG. 1B displays a magnified section of a reflective wall portion of the prior art headlamp in FIG. 1A.
FIG. 2A and 2B display a magnified section of a reflective wall portion according to two embodiments of the present disclosure, showing the headlamp housing shell 112 directly metallized to form a metallic layer 116 with an optional protective layer 118.

### DEFINITIONS

The terms "monomer" and "comonomer" are used interchangeably. The terms mean any compound with a polymerizable moiety that is added to a reactor in order to produce a polymer. In those instances, in which a polymer is described as comprising one or more monomers, e.g., a polymer comprising propylene and ethylene, the polymer comprises units derived from the monomers, e.g., -CH₂-CH₂-, and not the monomer itself, e.g., CH₂=CH₂.

As used herein, the term "polymer" means a macromolecular compound prepared by polymerizing monomers of the same or different type. The term "polymer" includes homopolymers, copolymers (including block and random), terpolymers, interpolymers, and so on.

As used herein, the term "polymer composition" refers to a composition made from and/or containing at least one polymer.

As used herein, the term "thermoset polymer" means a polymer that is irreversibly hardened by curing from a soft solid or viscous liquid prepolymer or resin.

As used herein, the term "thermoset composition" refers to a composition made from and/or containing at least one thermoset polymer.

The terms "parts" and "articles" are used interchangeable herein to refer to final or semi-final molded components for use on automotive vehicles such as automobiles, recreational vehicles, water vessels, and airplanes.

As used herein, the term "room temperature" refers to a temperature around 23 degrees Celsius (unless it is defined differently in an ASTM, in which case "room temperature" means as it is defined within that ASTM for that particular test/procedure/method).

As used herein, the term "metallization" refers to the application of a metal coating to another surface, also known as a substrate's surface. Depending on the desired result, the coating can include metals such as zinc, gold, aluminum or silver.

As used herein, the terms "vacuum metallizing" or "vacuum deposition" are used interchangeably to refer to a form of metallization that involves boiling the coating metal in a specially designed vacuum chamber and then allowing the condensation to form a deposit on the substrate's surface. The coating metal can be vaporized via techniques such as plasma or resistance heating.

As used herein, the terms "sputtering" or "sputter deposition" refers to a form of vacuum deposition that involves ejecting material from a source onto a substrate's surface to form a thin layer.

As used herein, the term "reactive monomer" refers to substances that are combined with polymer resins and become part of the polymer structure during the resins' subsequent curing via copolymerization. A "reactive diluent monomer" is a type of reactive monomer that also serves to dilute or reduce the viscosity of the resin for processing.

As used herein, the term "headlamp assembly" refers to an assembled headlamp and generally includes the headlamp housing defining an interior cavity, a reflector region in the interior cavity, and the light sources (for lower and higher intensity wavelengths). The headlamp housing is also called a "shell".

As used herein, the terms "reflector" and "reflective regions" refer to a metallized surface, or portion of the surface, of a headlamp housing that reflects light.

As used herein, the term "weight percent" or "wt. %" is based on the total weight of the BMC composition, pre-molded and pre-cured, unless otherwise described.

The use of the word "a" or "an" when used in conjunction with the term "comprising" in the claims or the specification means one or more than one, unless the context dictates otherwise.

The term " " means the stated value plus or minus the margin of error of measurement or plus or minus 10% if no method of measurement is indicated.

The use of the term "or" in the claims is used to mean "and/or" unless explicitly indicated to refer to alternatives only or if the alternatives are mutually exclusive.

The terms "comprise", "have", "include" and "contain" (and their variants) are open-ended linking verbs and allow the addition of other elements when used in a claim.

The phrase "consisting of" is closed, and excludes all additional elements.

The phrase "consisting essentially of" excludes additional material elements, but allows the inclusions of non-material elements that do not substantially change the nature of the invention.

A "method" is a series of one or more steps undertaken that lead to a final product, result or outcome. As used herein, the word "method" is used interchangeably with the word "process."

The following abbreviations are used herein:

| **ABBREVIATION** | **TERM** |
|---|---|
| BMC | Bulk molding compound |
| DVB | divinyl benzene |
| GU | Gloss units |
| ICM | Injection compression molding |
| NPG | neopentyl glycol |
| PBT | Polybutylene terephthalate |
| PET | Polyethylene terephthalate |
| TBHP | *tert*-butyl hydroperoxide |
| VT | vinyl toluene |
| wt. % | Weight percent |

### TEST METHODS

The compositions disclosed herein, the molded/cured articles, and the metallized articles were tested and analyzed using one or more of the following test methods:

The plasticity of molding compounds, pre-cure, is an index of the resistance to flow. The plasticity is determined by the number of seconds that is required for a plunger under constant pressure to move a fixed distance while forcing material (here the molding compound) through an orifice. The test method used herein utilized a device with an orifice that was 1.875 inch (~4.76 cm) in length with a 1° taper that was 0.423 inch (~1.07 cm) diameter at the bottom of the orifice and 0.390 inch (~1 cm) diameter at the top of the orifice. The plunger in this device had a diameter of 1.50 inch (~3.81 cm) and moved a fixed distance of 0.75 inch (~1.9 cm) while under pressure. The pressures used for the plunger in the present method were 48 psi (~0.33 mPa) and 90 psi (~0.62 mPa); however, other pressures between 30 (~0.21 mPa) and 120 psi (~0.83 mPa) can be used. The amount of molding compound used for each analysis was between 75 and 85 grams. Unless otherwise noted, the temperature of the device during each run was 72°F (~22.2°C).

The as-molded shrinkage and linear shrinkage is given in percentage (%) and measured using a method derived from ASTM D955, which is entitled "Standard Test Method of Measuring Shrinkage from Mold Dimensions of Thermoplastics." The term "ASTM D955" herein refers to the test method for determining the post-molding shrinkage of compression molded test specimen plaques of BMC materials in the directions parallel to and normal to the direction of melt flow. The shrinkage is measured using a "cold-mold to cold-part" comparison, wherein the 'cold' is room temperature. As such, this method also measures expansion (negative %) due to the metal mold shrinking or expanding more than the BMC parts.

Gloss is given in gloss units (GU) and measured using ASTM D2457-03 which is entitled "Standard Test Method for Specular Gloss of Plastic Films and Solid Plastics". The term "ASTM D2457" herein refers to the test method for determining the gloss for test specimens as compared to a black glass standard. The gloss is measured at a specular angle of 60°. Unless otherwise noted, the specimens for gloss measurements were plaques (6 inches x 6 inches) that were compression molded and cured at 340°F.

Flexural modulus (or "flex modulus") and Flexural strength (or "flex strength") are given in megapascal (MPa) and measured using ASTM D790-03, which is entitled "Standard Test Methods for Flexural Properties of Unreinforced and Reinforced Plastics and Electrical Insulating Materials." The term "ASTM D790" as used herein refers to the test method published in 2003.

The notched Izod impact strength measures the impact resistance of materials and is given in J/m. The standard testing method for notched Izod impact strength is Method A of ASTM D256-06, which is entitled "Standard Test Methods for Determining the Izod Pendulum Impact Resistance of Plastics". The term "ASTM D256" as used herein refers to the test method published in 2006.

Tensile Strength, Tensile Modulus, and Tensile Elongation (or Strain) are given in megapascal (MPa) and measured using ASTM D638-03, which is entitled "Standard Test Method for Tensile Properties of Plastics." The term "ASTM D638" as used herein refers to the test method published in 2003.

For molded articles that were metallized, the reflectance of the metallic reflector regions was measured using a Dyn-Optics Model 262 Optical Reflectometer. This particular reflectometer uses a soft probe that is connected to the instrument by fiber optics, which allows for the probe to measure reflectance at various locations on curved surfaces such as those in a headlamp housing. Further, the illumination source for this reflectometer is a white light LED that is electronically chopped and synchronously demodulated so that it is not affected by room light. During use, the soft probe touches and illuminates the surface to be measured, wherein the surface's reflectance is measured using the detected light reflected by the surface.

For the above-referenced ASTM standards, visit the ASTM website, www.astm.org, or contact ASTM Customer Service at service@astm.org.

### DESCRIPTION OF EMBODIMENTS OF THE DISCLOSURE

The present disclosure provides novel thermoset polyester-based bulk molding compounds (BMCs) that can be used in a variety of applications, including automotive parts that perform in, or are repeatedly exposed to, high temperature environments. In particular, the BMCs disclosed herein, when molded, have a smooth high gloss finish, low shrinkage, and high deformation resistance that are acceptable by the automotive industry. In particular, the presently disclosed BMCs find use as headlamp housing shells due to a high gloss smooth finish that can be directly metallized to form a highly reflective surface.

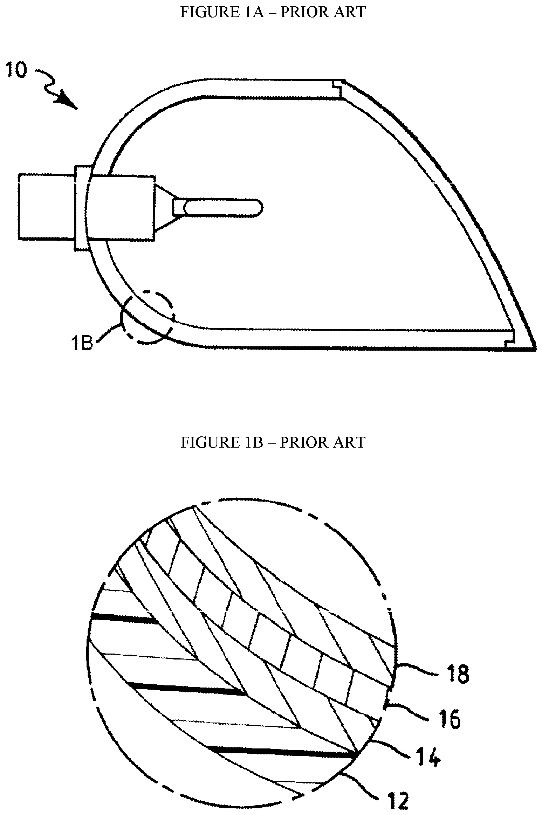

FIG. 1A shows a schematic cross section of a prior art headlamp assembly, showing a magnified section of a reflective wall portion in FIG. 1B. The headlamp assembly 10 includes a headlamp housing made out of a plastic resin material such as a BMC to have the general form of a hollow shell wall 12 with an internal cavity and a light projection opening. The internal cavity, or a portion thereof, can be metallized to form a reflective region for the headlamp assembly. The BMC that forms the shell wall 12 can include fill materials, moisture, and other components that cause irregularities at the surface of shell wall 12. As such, a base coat 14 has to be applied to the shell wall 12 to smooth and seal over the irregularities. The smooth base coat 14 is then metallized with a reflective layer 16 of a metal such as aluminum to form a reflector region. The reflective layer 16 is further coated with a clear protective coating 18 to prevent tarnishing or other injury to the reflective layer 16.

Elimination of the base coat before the metallization step is considered to be a significant improvement in headlamp and reflector manufacture as it reduces the cost of the coating equipment, reduces VOC emission, shortens the construction cycle time, and reduces the labor for metallizing a molded article.

To address the rough and irregular surfaces, modifications to the molding process have been made. US5865530 describes the use of BMC "324" for molding headlamp shells. Though the BMC 324 composition was well mixed, fast injection speeds and elevated mold temperatures were used during molding to allow the organic polymer base resin to bleed out of the composition, forming an outer 'skin' on the surface of the molded headlamp housing shell wall. This skin resulted in a high gloss, smooth surface that allowed for application of a metallic layer without a base coat. While this molding method improves the surface of the reflective region, further increases in surface smoothness are needed.

Provided herein are novel thermoset polyester-based BMC that have a smooth high gloss (> 85 GU at 60°) when molded, and a linear shrinkage between -0.4% and 0.8%. The molded BMC also have a flexural strength of at least 50 MPa (measured by ASTM 790), a tensile strength of at least 20 MPa (measured by ASTM 638), and a tensile modulus of at least 7000 MPa (measured by ASTM 638).

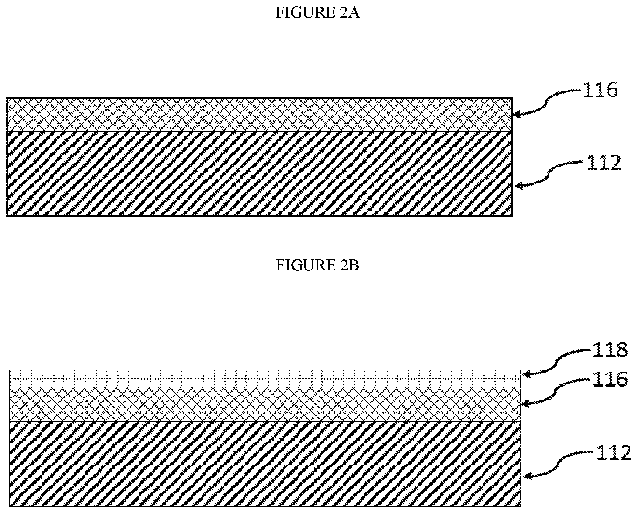

In some embodiments, the disclosed BMCs allow for the preparation of molded headlamp housing shells with high gloss, and the automotive manufacturers' flexural and tensile strength, tensile modulus, low shrinkage, and other physical property requirements, such that the molded parts can be metallized directly without the need for a base coat to smooth the molded shells, as shown in FIG. 2A. By reducing the shrinkage and eliminating the base coat, the molded part more accurately reproduces the mold dimensions than a base coated part. This is especially important for reflective regions of headlamp housings as defects in the reflectors therein produce an unwanted amount of scattering of the reflected light in an assembled headlamp. By metallizing a well-fitting, molded part directly, this effect can be reduced. After metallization, the molded components can be coated with a protective sealant to prevent tarnishing or other injury to the reflective layer, as shown in FIG. 2B.

In addition to headlamp components, these thermoset BMCs are useful for other molded components for automobiles, water vessels, locomotives, recreational vehicles, industrial vehicles, and airplanes.

In more detail, the thermoset BMCs described herein include: (1) a polyester resin system; (2) a curing package; and (3) an additive package with moisture absorbing compounds. The thermoset compositions may be molded into high gloss articles, including housing shells for headlamps, with physical properties (durability, flexural strength, flexural modulus, and shrinkage) that are acceptable to auto manufactures. A metallic layer may be applied directly to the surface of the molded articles to direct light within specific controlled parameters. For headlamp components, the metallized reflector regions of the molded articles are in compliance with 49 C.F.R. § 571.108 (FMVSS 108). An optional protective layer can also be applied over the metallic layer.

### I. Polyester Resin System

The polyester resin system includes at least one reactive unsaturated polyester, at least one non-reactive saturated polyester as described in claim 1, and two or more reactive monomers as described in claim 1. In some embodiments, at least one of the reactive monomers is a reactive diluent monomer that is dissolved in the unsaturated and/or saturated polyester resins to improve their processability, while the remaining reactive monomer(s) is added separately to the polyester resin system.

The polyester resin system is present in the thermoset BMC in an amount that ranges from 10 wt. % to 60 wt. %, based on the weight of the BMC composition. In some embodiments, the polyester resin system is present in an amount between 10 and 40 wt. %, based on the weight of the BMC composition; alternatively, the polyester resin system is present in an amount between 35 and 60 wt. %, based on the weight of the BMC composition; alternatively, the polyester resin system is present in an amount between 10 and 30 wt. %, based on the weight of the BMC composition; in yet another alternative, the polyester resin system is present in an amount between 25 and 50 wt. %, based on the weight of the BMC composition.

The reactive unsaturated polyester is the base resin in the polyester resin system. In some embodiments, the reactive unsaturated polyester is a formed by the condensation reaction between dibasic organic acids, or their related anhydrides, and polyhydric alcohols, which are also called a polyol. The polyols used include diols and glycols such as glycerine, ethylene glycol, diethylene glycol, monopropylene glycol, propylene glycol, tetramethylene glycol, and neopentyl glycol (NPG). The dibasic organic acids used include fumaric acid, maleic acid, naphthalene dicarboxylic acid, cyclohexane dicarboxylic acid, isophthalic acid, phthalic acid, terephthalic acid, adipic acid, succinic acid, and related anhydrides such as phthalic and maleic anhydride. The reactive unsaturated polyester can be a polyester formed by the reaction between any of these polyols and dibasic organic acids, and may be blends of two or more polyesters. Many reactive unsaturated polyesters are commercially available from AOC (T766 or ATRYL series), Ineos (Aropol series), and Polynt (such as Encore Prime or Distitron series). In some embodiments, the reactive unsaturated polyester is chosen such that it is soluble in a reactive diluent monomer such as vinyl toluene. In yet other embodiments, the reactive unsaturated polyester is an isophthalic polyester or a neopentyl glycol (NPG) isophthalic polyester such as ethylene glycol isophthalic.

The reactive unsaturated polyester is present in an amount between 10 and 20 wt. %, based on the weight of the BMC composition. In some embodiments, the reactive unsaturated polyester is present in an amount between 10 and 15 wt. %, based on the weight of the BMC composition; alternatively, the reactive unsaturated polyester is present in an amount between 15 and 20 wt. %, based on the weight of the BMC composition; alternatively, the reactive unsaturated polyester is present in an amount between 12 and 15 wt. %, based on the weight of the BMC composition.

In addition to the unsaturated polyester, the polyester resin system also includes a non-reactive saturated polyester as a low profile thermoplastic to help control the shrinkage of the BMC composition during molding. The non-reactive saturated polyester may be present in an amount from 5 to 15 wt. %, based on the total weight of the molded thermoset BMC. In some embodiments, the non-reactive saturated polyester may be present in an amount between 5 to 10 wt. %, based on the weight of the BMC composition; alternatively between 10 to 15 wt. %, based on the weight of the BMC composition; alternatively between 7.5 to 12.5 wt. %, based on the weight of the BMC composition; alternatively between 8 to 10 wt. %, based on the weight of the BMC composition.

In some embodiments, the non-reactive saturated polyester is a thermoplastic saturated polyester such as polyethylene terephthalate (PET) and polybutylene terephthalate (PBT). In other embodiments, the thermoplastic saturated polyester is commercially available from Polynt, Koch Industries (Dacron^{®} series), Ticona Corporation (Celanex^{®} series), and Eastman Chemicals (Tenite^{®} series). In yet other embodiments, the non-reactive saturated polyester is chosen such that it is soluble in the same reactive diluent monomer as the reactive unsaturated polyester.

The polyester resin system further includes two or more reactive monomers capable of forming covalent bond crosslinks with the unsaturated polyester resins. In some embodiments, the polyester resin system has two reactive monomers, wherein at least one reactive monomer is a reactive diluent monomer present in the unsaturated and saturated polyester resins and acts as a solvent to dissolve the unsaturated and saturated polyesters and improve their processability, and the remaining reactive monomer(s) is added to the resin system separately.

The combined amount of reactive monomers, both added and diluent monomers in the polyester resins, in the BMC composition range from 5 wt. % to 25 wt. %, based on the total weight of the BMC composition. In some embodiments, the total amount of reactive monomers in the BMC composition range 5 wt. % to 10 wt. %, based on the weight of the BMC composition; alternatively the total amount of reactive monomers in the BMC composition range 15 wt. % to 25 wt. %, based on the weight of the BMC composition; alternatively, the total amount of reactive monomers in the BMC composition range 7.5 wt. % to 12.5 wt. %, based on the weight of the BMC composition; alternatively, the total amount of reactive monomers in the BMC composition range 9 wt. % to 16 wt. %, based on the weight of the BMC composition.

, the polyester resin system uses at least one reactive monomer as a diluent monomer in the polyester resins as reported in claim 1. In these embodiments, the at least one reactive diluent monomer can comprise 25 to 30 wt. % of the weight of the unsaturated polyester and 50-70 wt. % of the weight of the saturated polyester; alternatively, the reactive diluent monomer can comprise 28 wt. % of the weight of the unsaturated polyester and 60 wt. % of the weight of the saturated polyester. In yet another alternative, the reactive diluent monomer can be present in an amount between 5 and 16.5 wt. % based on the weight of the BMC composition; alternatively, the reactive diluent monomer can be present in an amount of 10 wt. % based on the weight of the BMC composition.

The reactive diluent monomer and the added reactive monomer are described in claim 1. The combination of VT and DVB results in a composition having a gloss value of at least 88 GU (measured at 60°) or greater, as shown in TABLES 3 and 5. Further, this combination of reactive monomers was also found to reduce surface defects such as laking.

### II. Curing Package

The presently disclosed BMC compositions also include a curing package to control crosslinking and setting of the polyester resin system. The curing package includes an inhibitor, initiator and accelerator. In some embodiments, the combined amount of the curing package in the thermoset BMC compositions range from greater than 0 wt. % to 1.1 wt. %, based on the total weight of the BMC composition. In some embodiments, the curing package is present in an amount between greater than 0 wt. % and 0.75 wt. %, based on the weight of the BMC composition; alternatively, the curing package is present in an amount between 0.2 and 1.1 wt. %, based on the weight of the BMC composition; alternatively, the curing package is present in an amount between 0.5 and 1.1 wt. %, based on the weight of the BMC composition.

The curing package employs an inhibitor to allow for time to fill the mold with the thermoset BMC composition before the onset of the cure reaction. The inhibitor may be present in an amount from greater than 0 to 0.2 wt. %, based on the total weight of the BMC composition. In some embodiments, the inhibitor is present in an amount between greater than 0 to 0.15 wt. %, based on the total weight of the BMC composition; alternatively, the inhibitor is present in an amount between 0.1 to 0.2 wt. %, based on the total weight of the BMC composition; alternatively, the inhibitor is present in an amount between 0.03 to 0.08 wt. %, based on the total weight of the BMC composition; alternatively, the inhibitor is present in an amount of 0.04 wt. %, based on the total weight of the BMC composition.

Any known inhibitor can be used, including quinone-based inhibitors. Many inhibitors for use in the present BMCs are commercially available from, for example, Nouryon (formerly AkzoNobel Specialty Chemicals, NLC-20) and Eastman Chemicals. In some embodiments, the inhibitor is para-benzoquinone, hydroquinone, toluhydroquinone, chloranil, diallylphthalate, butylated hydroxytoluene, 4-tert-butyl catechol, or mono-tert-butylhydroquinone.

The curing package further comprises an initiator to initiate the curing reaction after the BMC composition is placed in the heated mold. The initiator may be present in an amount from greater than 0 to 0.5 wt. %, based on the total weight of the BMC composition. In some embodiments, the initiator is present in an amount between greater than 0 to 0.3 wt. %, based on the total weight of the BMC composition; alternatively, the initiator is present in an amount between 0.25 to 0.5 wt. %, based on the total weight of the BMC composition; alternatively, the initiator is present in an amount between 0.15 to 0.4 wt. %, based on the total weight of the BMC composition; alternatively, the initiator is present in an amount of 0.16 wt. %, based on the total weight of the BMC composition.

Any initiator used to initiate curing of polyester-based thermosets can be used in the present curing package. In some embodiments, an organic peroxide initiator is used, including organic hydrogen peroxide, peresters, and organic peracids. In some embodiments the organic peroxide initiator is *tert*-butyl perbenzoate, di(*tert*-butylperoxyisopropyl)benzene, cumene hydroperoxide, benzoyl peroxide, methyl ethyl ketone peroxide, *tert*-butyl hydroperoxide (TBHP), cyclohexylidenebis[(1,1-dimethylethyl) peroxide, or TBHP oxidate. In other embodiments, the organic peroxide is di(*tert*-butylperoxyisopropyl)benzene as this allows for higher molding and curing temperatures then other organic peroxides. Other initiators include 2,5-Dimethyl-2,5-di-*tert*-butylperoxyhexyne-3, and *tert*-Butyl isopropylcarbonate. Many initiators for use in the present BMCs are commercially available from, for example, Nouryon (formerly AkzoNobel Specialty Chemicals, Perkadox^{®} 14s-FL and Butanox^{®} series), Arkema (Luperox^{®} 130) and United Initiators (Benox^{®} and Curox^{®} series).

The curing package may also employ an accelerator to control the shelf life of the BMC composition before molding and to enhance the curing rates during molding. The accelerator, if utilized, may be present in an amount from greater than 0 to 0.4 wt. %, based on the total weight of the BMC composition. In some embodiments, the accelerator may be present in an amount between greater than 0 to 0.3 wt. %, based on the total weight of the BMC composition; alternatively, the accelerator is present in an amount between 0.25 to 0.4 wt. %, based on the total weight of the BMC composition; alternatively, the accelerator is present in an amount between 0.15 to 0.3 wt. %, based on the total weight of the BMC composition; alternatively, the accelerator is present in an amount of 0.2 wt. %, based on the total weight of the BMC composition.

Any known accelerator used in BMCs can be used in the presently disclosed BMC compositions. Many accelerators for use in the present BMCs are commercially available including, for example, Comar Chemicals (COMACC series) and Nouryon (formerly AkzoNobel Specialty Chemicals, CF and NL series). In some embodiments, an organo-metallic or organo-metalloid accelerator such as soluble salts of reactive metals such as manganese octanoate, cobalt naphthenate, cobalt decanoate, cobaltic acetylacetonate, lithium octanoate, lithium thiocyanate, aluminum laurate, aluminum octoate, and gallium octoate is used.

In some embodiments, the curing package combines para-benzoquinone, di(*tert-*butylperoxyisopropyl)benzene, and cobaltic acetylacetonate. This combination allows for a mold and cure temperature as high as 390-400°F (~199-204°C) for the presently disclosed BMC, which is 40 degrees higher than other known BMCs used for headlamps, and may impart further improvements to the surface finish of the molded article.

### III. Additive Package

The presently disclosed BMC compositions also include an additive package comprises moisture absorbing components, particle fillers, reinforcing fiber fillers, a mold release agent, and a thickener. Other optional additives such as scratch reduction additive(s), neutralizer(s)/acid scavenger(s), antioxidant(s), odorants, deodorants, lubricants, surfactants, wetting agents, flame retardants, biocides, metal deactivating agents, heat stabilizers, defoaming agents, coupling agents, and other materials can also be included in the additive package to enhance processability or end-use properties of the BMC composition.

Removing trace amounts of water prior to molding improves the consistency of the surface gloss and reduces molding defects, mainly laking and cloudiness, for BMCs. In previously known methods, the moisture was removed by baking the composition. While this helps to improve the surface, baking water out is not practical and can be time consuming.

In contrast to previously known methods, the presently disclosed BMC utilizes moisture adsorbing chemicals, or desiccants, to adsorb water prior to molding without affecting the final composition or article molded therefrom. This allows for improved surface appearance and gloss of the molded articles while decreasing the production time.

Examples of moisture adsorbing chemicals include molecular sieves, silica gel, activated charcoal, calcium sulfate, and calcium chloride. In some embodiments, the moisture adsorbing chemicals are molecular sieves such as zeolites and other crystalline alkali metal aluminosilicates. Molecular sieves quickly absorb water, and due to their uniform structure, will not let the moisture back out. In some embodiments, the moisture adsorbing chemicals are alkali metal aluminosilicates molecular sieves that have a Type A crystal structure and pore openings that are 0.3 nm (3A) or 0.4 nm (4A) in diameter. Many such molecular sieves are commercially available from UOP (Molsiv^{™} Adsorbent 3A and 4A powder), Alfa Aesar (B21165 powder), and BASF.

The molecular sieves may be present in an amount from greater than 0 to 0.6 wt. %, based on the total weight of the BMC composition. In some embodiments, the molecular sieves are present in an amount between greater than 0 to 0.3 wt. %, based on the total weight of the BMC composition; alternatively, the molecular sieves are present in an amount between 0.25 to 0.6 wt. %, based on the total weight of the BMC composition; alternatively, the molecular sieves are present in an amount between 0.15 to 0.4 wt. %, based on the total weight of the BMC composition; alternatively, the molecular sieves are present in an amount of 0.2 wt. %, based on the total weight of the BMC composition.

The additives package also includes at least one particle filler to lower the cost of the material while improving dimensional stability. The particle filler may be present in an amount from 0 to 65 wt. %, based on the total weight of the BMC composition. In some embodiments, the particle fillers are present in an amount between greater than 0 to 35 wt. %, based on the total weight of the BMC composition; alternatively, the particle fillers are present in an amount between 25 to 65 wt. %, based on the total weight of the BMC composition; alternatively, the particle fillers are present in an amount between 15 to 45 wt. %, based on the total weight of the BMC composition; alternatively, the particle fillers are present in an amount of 20 to 30 wt. %, based on the total weight of the BMC composition.

In some embodiments, the particle filler may be selected from a talc having a high aspect ratio, glass, glass beads, ground glass, calcium carbonate, silica, wollastonite, clay, mica, alumina trihydrate, and combinations thereof (such as talc with mica).

In other embodiments, the particle fillers are a combination of a small calcium carbonate with an average particle size of 2 microns or smaller, such as Omyacarb F, Omyacarb UF, or Albaglos, Mississippi Lime HOM-60, and a large calcium carbonate with an average particle size of 3 microns or larger, such as Hubercarb W-3N, atomite or camel-wite. Alternatively, a calcium carbonate having an average particle size of 0.9 microns and present in an amount of 22 to 28 wt. % based on the total weight of the BMC composition is combined with a calcium carbonate having an average particle size of 3 microns and present in an amount of 20 to 29 wt. % based on the total weight of the BMC composition.

In other embodiments, ground or crushed glass is also present in the additive package in any amount up to 8 wt. % based on the total weight of the BMC composition is combined with the large and small calcium carbonate fillers. Alternatively, it is present in an amount of 3.5 wt. % based on the total weight of the BMC composition. The ground glass may be 80/170 ground glass, which has a size between 80 and 170 mesh on the US Sieve Series Scale.

In addition to the particle fillers, the additive package includes reinforcing fiber fillers to impart strength and flexibility to the BMC composition. The reinforcing fiber fillers may be present in an amount great than 0 to 20 wt. %, based on the total weight of the BMC composition. In some embodiments, the reinforcing fiber fillers are present in an amount between greater than 0 to 15 wt. %, based on the total weight of the BMC composition; alternatively, the reinforcing fiber fillers are present in an amount between 10 to 20 wt. %, based on the total weight of the BMC composition; alternatively, the reinforcing fiber fillers are present in an amount between 7 to 16 wt. %, based on the total weight of the BMC composition; alternatively, the reinforcing fiber fillers are present in an amount of 13 wt. %, based on the total weight of the BMC composition.

Reinforcing fiber fillers used in the presently disclosed BMC compositions include glass, carbon, polyimides, polyesters, polyamides, and natural fibers such as cotton, silk, and hemp.

In some embodiments, the reinforcing fiber fillers are glass fibers, also referred to herein as 'fiberglass', in the form of chopped strands. Chopped strand fiberglass with lengths between 1/64 inch (~0.039 cm) to 1 inch (~2.54 cm) may be used. A mixture of fiberglass with different strand lengths can be used in the additive package.

In other embodiments of the additive package, chopped fiberglass strands with lengths between 0.125 inch (~0.3175 cm) to 0.25 inch (~0.635 cm) are used. Alternatively, a fiberglass with a length of 0.25 inch and present in an amount of 10.50 wt. % is combined with a fiberglass with a length of 0.125 inch and present in an amount of 2.50 wt. %.

Other additives such as mold release additives and thickeners are used to improve the molding and curing of the BMC material.

In some embodiments, the additive package further comprises an internal mold release additive to prevent the cured article from sticking to the mold. The internal mold release additive may be present in an amount from 0.5 to 2 wt. %, based on the total weight of the BMC composition. In some embodiments, the internal mold release additive is present in an amount between 0.5 to 1.7 wt. %, based on the total weight of the BMC composition; alternatively, the internal mold release additive is present in an amount between 1.25 to 2 wt. %, based on the total weight of the BMC composition; alternatively, the internal mold release additive is present in an amount between 0.75 to 1.25 wt. %, based on the total weight of the BMC composition; alternatively, the internal mold release additive is present in an amount of 0.95 wt. %, based on the total weight of the BMC composition. Any known internal mold release agent such as glycerol monostearate, stearic acid, a stearate salt, magnesium stearate, zinc stearate, calcium stearate can be used.

Alternatively, a polymeric processing aid with mold release properties can be used in place of the internal mold release additive in some embodiments. For example, a polymeric processing aid containing phosphoric acid polyester can have mold release properties that prevent a cured article from sticking to the mold. The polymeric processing aid with mold release properties is present in an amount between 0.6 wt. % to 3.0 wt. %, based on the total weight of the BMC composition; alternatively, the polymeric processing aid with mold release properties is present in an amount between 0.6 wt. % to 1.5 wt. % based on the total weight of the BMC composition; alternatively, the polymeric processing aid with mold release properties is present in an amount between 1.0 wt. % to 2.5 wt. % based on the total weight of the BMC composition; alternatively, the polymeric processing aid with mold release properties is present in an amount between 1.75 wt. % to 3.0 wt. % based on the total weight of the BMC composition.

Some embodiments of the BMC compositions also include a thickening agent in the additive package to control the viscosity of the molding compounds throughout the production processes. The thickening agent may be present in an amount from greater than 0 to 0.3 wt. %, based on the total weight of the BMC composition. In some embodiments, the thickening agent is present in an amount between greater than 0 to 0.2 wt. %, based on the total weight of the BMC composition; alternatively, the thickening agent is present in an amount between 0.15 to 0.3 wt. %, based on the total weight of the BMC composition; alternatively, the thickening agent is present in an amount between 0.1 to 0.23 wt. %, based on the total weight of the BMC composition; alternatively, the thickening agent is present in an amount of 0.15 wt. %, based on the total weight of the BMC composition.

Alkali earth oxides and hydroxides are used as thickening agents for the presently BMC composition as they form ionic bonds with terminal carboxylate groups of polyester resins. Of these thickening agents, magnesium oxide is the most commonly used, although calcium oxide and magnesium hydroxide can also be used with polyesters.

The combined amount of the additive package, including the fillers, in the thermoset BMC compositions can be as high as 80 wt. %, based on the total weight of the BMC composition. In some embodiments, the additive package is present in an amount between greater than 0 wt. % and 40 wt. %, based on the weight of the BMC composition; alternatively, the additive package is present in an amount between 35 and 80 wt. %, based on the weight of the BMC composition; alternatively, the additive package is present in an amount between 45 and 70 wt. %, based on the weight of the BMC composition.

### IV. Molding

Each component in the presently described BMC composition is mixed together in a standard BMC mixer before the molding and curing process. In some embodiments, a liquid component is formulated first by combining the curing package and any liquid additives (such as internal mold release agents and thickening agents) with the polyester resin system and mixing thoroughly. The pre-blended solids (particle fillers, crushed glass, fiberglasses) are then mixed into the formulated liquid resin to form a homogeneous compound.

Once mixed, the presently disclosed compositions are molded and cured. To obtain articles with a smooth surface, the molding process uses a fast injection speed and elevated mold temperatures compared to standard BMC molding procedures, and a smooth high gloss mold. Alternatively, the mixed BMC composition can be placed in a vapor barrier bag for storage for several days, and up to 45 days, before being molded.

An elevated mold temperature is used as it makes the bulk molding material more fluid, and therefore conforms better to the exact surface details of the mold. The thermoplastic saturated polyester in the formulation is believed to be more fluid and pliable at the elevated temperatures. The more fluid the thermoplastic becomes, the more thoroughly the thermoplastic is compressed to form a smooth surface, thereby allowing the BMC to take on the high gloss surface finish of the mold. A fast injection speed also improves the surface because the material tends to have a porous surface when injection speeds are too slow.

Any method that utilizes fast injection speeds and elevated mold temperatures, standard BMC molding procedures, can be used. One such method is disclosed in US5865530, incorporated herein in its entirety for all purposes. As discussed above, US5865530 describes a process using fast injection speeds and a mold with elevated temperatures such that the resin can "bleed" out of the BMC compound and form a smooth skin over the mold surface. High compression pressures can also be used to further improve the molded article.

In some embodiments, the mold temperature is between 300°F (~148°C) and 425°F (~218°C). Alternatively, the mold temperature is between 300°F (~148°C) to 390°F (~199°C); or, between 350°F (~176°C) to 380°F (~193°C); or, between 375°F (~190°C) to 425°F (~218°C). In yet another alternative, the mold temperature is 340°F (~171°C).

The selected injection speed is fast enough to limit a porous surface but not too fast that it causes dieseling, or burns, at the end of the flow fronts. For the presently disclosed BMC materials, an injection speed of 4 seconds or less is used. Alternatively, an injection speed of 2 seconds or less is used. In some embodiments, the selected injection speed is obtain using an injection flow rate in the range of 200 to 300 cubic centimeters per second or an injection pressure in the range of 2000 pounds per square inch. Both the injection rate and injection pressure can be varied to achieve the selected injection speed.

In addition to fast injection speeds and elevated mold temperatures, a highly polished and chrome plated mold is used to impart a high gloss and smooth finish on the molded article. Further, chrome aids in the release of the mold and protects the surface finish of the article during the curing process. Use of other metals as the mold is possible as long as they are not eroded or damaged by the BMC compositions. For example, steel is eroded by glass flowing across the mold and would not be a usable mold material for the presently described BMCs that use fiberglass and crushed glass fillers.

Once molded and cured, the article is removed from the mold, cleaned and then metallized directly without the need for an intermediate layer or base coat. An additional protective sealant layer can be applied thereafter to protect the metallic surface.

Any known method of cleaning can be used as long as it does not leave any contamination (such as spotting) on the surface of the region that will be metallized. Any residue or contamination in the reflector region becomes visible after metallization, resulting in performance failures due to uncontrolled scattering of light. In some embodiments, deionized water and IPA isopropyl alcohol solvent washes are used as both do not leave behind residue and are easily dried, without residue, using heated convection air.

After being cleaned, the articles are metallized. Any known method of metallization can be used, including vacuum metallizing or sputter deposition. In some embodiments, aluminum is applied in a vacuum metallization process. Alternatively, other metals such as silver, zinc, and gold can be applied.

In alternate embodiments, the region of interest on the article is metallized in a vacuum metallization chamber. The metallization cycle takes 40 minutes to pump down at 0.002 millibar (~0.2 Pa), 3 to 5 minutes of glow discharge at 0.01 Mbar (~1000 MPa), and 1 minute of metal deposition at 0.0004 Mbar (~40 MPa). While in the vacuum metallization chamber, the article can further be coated with a protective layer made from siloxane or an acrylic urethane.

### V. Physical Properties

The above described thermoset BMC compositions can have the following physical properties before being molded:

### Plasticity

In some embodiments, the BMC composition has a plasticity, measured at 90 psi (~0.62 MPa) using the methods described herein, of 1 to 6 seconds; alternatively, from 1 to 4 seconds; alternatively, from 3.5 to 6 seconds; alternatively, 2 seconds.

In other embodiments, the BMC composition has a plasticity, measured at 48 psi (~0.33 MPa) using the methods described herein, of 2 to 8 seconds; alternatively, from 2 to 5 seconds; alternatively, from 4 to 8 seconds; alternatively, 3 seconds.

The above described thermoset BMC compositions can have the following physical properties when molded:

### Flexural Strength

In some embodiments, the molded thermoset BMC composition has a flexural strength (ASTM D790) of at least 50 MPa; alternatively, from 50 to 85 MPa; alternatively, from 65 to 100 MPa; alternatively, from 85 to 110 MPa.

### Flexural Modulus

In some embodiments, the molded thermoset BMC composition has a flexural modulus (ASTM D790) of at least 10,000 MPa; alternatively, from 10,000 to 12,500 MPa; alternatively, from 11,500 to 17,500 MPa; alternatively, from 13,500 to 20,000 MPa.

### Tensile Strength at Yield

In some embodiments, the molded thermoset BMC composition has a tensile yield strength (ASTM D638) of at least 20 MPa; alternatively, from 20 to 40 MPa; alternatively, from 35 to 60 MPa; alternatively, from 35 to 45 MPa.

### Tensile Modulus

In some embodiments, the molded thermoset BMC composition has a flexural modulus (ASTM D790) of at least 10,000 MPa; alternatively, from 10,000 to 12,500 MPa; alternatively, from 11,500 to 17,500 MPa; alternatively, from 13,500 to 20,000 MPa.

### Notched Izod impact strength at 23°C

In some embodiments, the molded thermoset BMC composition has a notched Izod Impact at 23°C (ASTM D256) from 60 to 300 J/m; alternatively, from 100 to 250 J/m; alternatively, from 200 to 300 J/m; alternatively, from 160 to 240 J/m; and alternatively, from 180 to 220 J/m.

### Linear shrinkage

In some embodiments, the molded thermoset BMC composition, without a base coat, has a linear shrinkage (ASTM D955) of between -0.4% and 0.8%; alternatively, from -0.4 to 0.4%; alternatively, from 0.1 to 0.8%; and alternatively, from 0.3 to 0.5%.

### Gloss measured at 60°

For automotive applications, such as headlamps, the molded compound has a smooth surface profile. One method of evaluating the smoothness is to measure the gloss of the surface. In some embodiments, the molded thermoset BMC composition, without a base coat or a metallic layer, has a gloss of at least 85 GU measured at 60° (ASTM D2457). Alternatively, the gloss measured at 60° is at least 100 GU.

### Reflectance

Certain areas of the molded article, or the whole surface of the article, can be metallized directly without a base layer to form a reflective region or reflector. In some embodiments, the reflective region of a metallized article prepared from the disclosed thermoset polyester-based BMC composition, without a base coat, has a reflectance of at least 80%; alternatively, from 82 to 90%; and, alternatively, from 83 to 87%.

### EXAMPLES

The following examples are included to demonstrate embodiments of the appended claims using the above described BMC compositions and methods of forming metallized articles therefrom. These examples are intended to be illustrative, and not to unduly limit the scope of the appended claims.

Compositions 1-8 are BMCs according to the embodiments of the present disclosure. After being mixed and molded, a series of measurements were performed to evaluate the compositions' suitability for automotive applications, particularly headlamps housings with a reflector.

**Materials.** The formulation for Composition 1 is provided in Table 1, and the formulations for Compositions 2-8 are provided in Table 2. The weight percentages in Tables 1 and 2 were calculated using the total weight of the BMC composition.

Resin A is an unsaturated isophthalic polyester formed by reacting propylene glycol, isophthalic acid, and maleic anhydride, and Resin B is a saturated polyester formed by reacting a glycol mixture and adipic acid. Both of these resins have vinyl toluene incorporated therein as a reactive diluent monomer. Resin A is 28% VT and Resin B is 30% VT, resulting in a total VT concentration of 7.18 wt. % of the BMC composition. Resin C is the same as Resin A except styrene is incorporated therein as the reactive diluent monomer instead of VT. Similarly, Resin D is the same as Resin B except styrene is incorporated therein as the reactive diluent monomer. DVB was utilized as the second reactive monomer in all formulations and is added separately to the resins.

The compositions utilized up to three particle fillers and two fiberglass reinforcing fillers. Particle filler A was a calcium carbonate with an average particle size of 0.9 microns. Particle filler B was a larger calcium carbonate with an average particle size of 3 microns. Particle filler C was 80/170 mesh ground glass. Both of the fiberglass reinforcements were chopped strands, wherein Fiberglass A has a strand length of 1/8" (~0.32 cm) and Fiberglass B has a strand length of 1/4" (~0.64 cm). Magnesium oxide was used as the thickening agent, and calcium stearate was the internal mold release additive. Alkali metal aluminosilicates molecular sieves with a Type A crystal structure and pore openings that are 0.3 nm in diameter were used as a moisture absorbing component to absorb moisture from the composition before the molding process.

For the curing, cobaltic acetylacetonate was used as the accelerator and para-benzoquinone was used as the inhibitor. Composition 1 utilized *Di*(*tert-*butylperoxyisopropyl)benzene as the initiator (Initiator A) and Compositions 2-8 utilized a commercially available Perkadox initiator (Initiator B).

The components of each composition were combined and blended in a standard BMC mixer before being injected at high speeds and under pressure into a highly polished and chrome plated mold to be molded and cure. The mold temperatures for all compositions were elevated compared to standard BMC molding procedures, and were either 340°F (~171°C) or 400°F (~205°C).

| **Table 1: Formulation of Composition 1** | | |
|---|---|---|
| **Category** | **Raw Material** | **Comp. 1 (wt. %)** |
| Resin | Resin A in 28% Vinyl Toluene | 16 |
| Resin | Resin B in 30% Vinyl Toluene | 9 |
| Reactive Monomer | DVB | 5 |
| Additive | Calcium stearate | 0.95 |
| Additive | MqO | 0.15 |
| Additive (moisture control) | Molecular sieves | 0.2 |
| Additive (filler) | Particle A | 22 |
| Additive (filler) | Particle B | 29.77 |
| Additive (filler) | Particle C | 3.5 |
| Additive (fiber) | Fiberglass A | 2.50 |
| Additive (fiber) | Fiberglass B | 10.50 |
| Curing | Inhibitor | 0.08 |
| Curing | Initiator A | 0.15 |
| Curing | Accelerator | 0.20 |
| Mold Temp. | | 340°F |
| Plasticity at 0.62 Mpa 22.2 °C (90 psi/72°F) | | 4.2 s |
| Comp. = composition | | |

| **Table 2: Formulation of Compositions 2-8** | | | | | | | | |
|---|---|---|---|---|---|---|---|---|
| **Category** | **Raw Material** | **Comp. 2 (wt. %)** | **Comp. 3 (wt. %)** | **Comp. 4 (wt. %)** | **Comp. 5 (wt. %)** | **Comp. 6 (wt. %)** | **Comp. 7 (wt. %)** | **Comp. 8 (wt. %)** |
| Resin | Resin A in 28% Vinyl Toluene | 16 | | 16 | 16 | 16 | 16 | 16 |
| Resin | Resin B in 30% Vinyl Toluene | 9 | | 9 | 9 | 9 | 9 | 9 |
| Resin | Resin C in 28% Styrene | | 16 | | | | | |
| Resin | Resin D in 30% Styrene | | 9 | | | | | |
| Reactive Monomer | DVB | 5 | 5 | 5 | 5 | 5 | 5 | 5 |
| Additive | Calcium stearate | 0.95 | 0.95 | 0.95 | 0.95 | 0.95 | 0.95 | 0.95 |
| Additive | MgO | 0.15 | 0.15 | 0.15 | 0.15 | 0.15 | 0.15 | 0.15 |
| Additive (moisture control) | Molecular sieves | 0.2 | 0.2 | 0.4 | 0.2 | 0.2 | 0.2 | 0.2 |
| Additive (filler) | Particle A | 22 | 22 | 22 | 22 | 22 | 22 | 22.17 |
| Additive (filler) | Particle B | 29.77 | 29.77 | 29.57 | 29.77 | 29.8 | 29.8 | 33.3 |
| Additive (filler) | Particle C | 3.5 | 3.5 | 3.5 | 3.5 | 3.5 | 3.5 | 0.0 |
| Additive (fiber) | Fiberglass A | 2.50 | 2.50 | 2.50 | 2.50 | 2.50 | 2.50 | 2.50 |
| Additive (fiber) | Fiberglass B | 10.50 | 10.50 | 10.50 | 10.50 | 10.50 | 10.50 | 10.50 |
| Curing | Inhibitor | 0.08 | 0.08 | 0.08 | 0.08 | 0.04 | 0.04 | 0.08 |
| Curing | Initiator B | 0.15 | 0.15 | 0.15 | 0.15 | 0.16 | 0.16 | 0.15 |
| Curing | Accelerator | 0.20 | 0.20 | 0.20 | 0.20 | 0.20 | 0.20 | 0.0 |
| Mold Temp. | | 340°F | 340°F | 340°F | 400°F | 340°F | 400°F | 340°F |
| Plasticity at 90 psi/72°F | | 2.9 s | 1.3 s | 5.2 s | 2.9 s | 1.8 s | 1.8 s | 4.0 s |
| Comp. = composition | | | | | | | | |

Depending on the characterization methods, the compositions were either compression molded into 6 inch x 6 inch plaques that were not coated, or injection molded into headlamp housings and metallized directly. No protective or sealant layers were added to the molded articles.

**Characterization.** Physical properties of Compositions 1-8 as molded were determined using the test methods described above in the section entitled "Test Methods", and the following instrumentation.

Gloss - A BYK-Gardner Haze-Gloss meter was used to measure the gloss at 60°. Unless otherwise noted, the gloss measurements were performed on compression molded 6 inch x 6 inch plaques of the compositions without a base coat and before metallizing.

Metallization Rating - After the compositions were injection molded into a headlamp housing, the internal cavity of the housing was cleaned and then metallized directly without a base coat to form a reflector region. A visual inspection of the metallized parabola area of the reflector region was performed to determine defects such as cloudiness, laking, dullness, and smears. This appearance rating system has a scale from 0 (best) to 10 (worst). The reflectance of the reflector region was also measured using an optical reflectometer.

**Results.** For automotive applications, especially molded headlamps without base coatings, the BMC material should provide a high gloss, low profile surface sufficient to accept direct metallization without a base coat, yielding a highly reflective surface with little or no surface glare or haze. The molded article should also be resistant to the temperature extremes, mechanical stresses, and chemical environment typical of the extremes seen by a vehicle headlamp. Composition 1 was evaluated for use in headlamp applications and Tables 3-4 display the results for this evaluation.

Table 3 displays the results of the physical property measurements of Composition 1 after it was compression molded at 340°F (~171°C).

| **Table 3: Physical Property Performance of Composition 1** | | |
|---|---|---|
| **Property** | **Method** | **Composition 1** |
| Flexural Strength (MPa) | ASTM D790 | 94.3 |
| Flexural Modulus at 22°C (MPa) | ASTM D790 | 8895.9 |
| Tensile Strength at Yield (MPa) | ASTM D638 | 41.2 |
| Tensile Modulus (MPa) | ASTM D638 | 10804.8 |
| Maximum Tensile Strain Extension (in) | ASTM D638 | 0.011 |
| Notched Izod Impact Strength at +23°C (J/m) | ASTM D256 | 282.4 |
| Linear Shrinkage (%) | ASTM D955 | 0.4 |
| Gloss at 60° (GU) | ASTM D2457 | 104 |

Composition 1 was found to have acceptable strength and shrinkage properties for use in automotive applications, especially as headlamp housings that will be metallized to include a reflector region.

Properties of particular interest to automotive manufacturers are the strength of the molded article (both flexural and tensile), the tensile modulus, and linear shrinkage. A comparison of Composition 1's properties with requirements of headlamps by one such automotive manufacture is shown in Table 4. Composition 1 met or exceeded these requirements.

| **Table 4: Property Comparison** | | |
|---|---|---|
| **Property** | **Automotive MFG** | **Composition 1** |
| Flexural Strength (MPa) | ≥ 50 | 94.3 |
| Tensile Strength at Yield (MPa) | ≥ 20 | 41.2 |
| Tensile Modulus (MPa) | ≥ 7000 | 10804.8 |
| Linear Shrinkage (%) | -0.4 - 0.8 | 0.4 |

For headlamp applications, the molded compound must also have a smooth surface profile, especially if the base coat will be eliminated. One method of evaluating the smoothness is to measure the gloss of the surface. If the surface of the molded article has defects and is not smooth, then the reflection of light will be distorted, and the gloss value will be low. A smooth surface profile, however, will have a high gloss value of at least 85 when measured at 60°. Composition 1 had a gloss value of 104 GU, indicating that the surface is smooth and amendable to direct metallization for headlamp applications.

Composition 1 was injection molded into a headlamp housing. The headlamp housing, including the internal cavity (parabola), was visually inspected for surface defects. After no defects were found, the surface of the molded headlamp housing was then metallized directly without an intermediate layer or base coat. The surface of the internal cavity was then visually inspected and given a rating of 0.5. The light output, or reflectance, for the internal cavity of the metallized housing was also measured. The light output for the internal cavity was 87.1%, which exceeds requirements set by manufacturers.

In view of the above results for Composition 1, the physical properties, gloss and light output was evaluated for Compositions 2-8, which had small modifications to their formulation and/or molding temperature.

Compositions 2-8 had similar strength and shrinkage properties as Compositions 1, and met or exceeded the requirements from the automotive manufacturer. The results of the surface evaluation for each composition are shown in Table 5.

| **Table 5: Gloss and Reflectance of Compositions 2-8** | | | | |
|---|---|---|---|---|
| | **Gloss at 60° (GU)^{‡}** | **Visual Rating** | **Reflectance (%)^{‡‡}** | **Formulation changes compared to Comp. 2** |
| Comp. 2 | 101 | 1.5 | 83 | |
| Comp. 3 | 92 | 3.0 | 83.4 | Styrene reactive diluent monomer |
| Comp. 4 | 102 | 1.4 | 85.6 | Increase molecular sieve content |
| Comp. 5 | n/a | 1.5 | 85.3 | Higher mold temperature |
| Comp. 6 | 102 | 2.0 | 83.4 | Increased initiator content |
| Comp. 7 | n/a | 1.5 | 86.5 | Increased initiator content and higher mold temp |
| Comp. 8 | 93 | 4.0 | 82.7 | No Filler C |
| ‡ - measured on compression molded plaques pre-metallization | | | | |
| ‡‡ - measured on injection molded headlamp housings post-metallization | | | | |

Each composition had a gloss value of over 90 GU, indicating that it could be metallized directly. The largest gloss values were observed in the compositions with more initiator B or a larger molecular sieve content. However, this increase was not significant (101 GU v. 102 GU).

The compositions were injection molded into headlamp housings and metallized. The high gloss compositions also had lower surface defects and thus a lower visual rating. This resulted in a higher reflectance measurement as well. However, all compositions had a reflectance of at least 82.7%. Further, changing the reactive diluent monomer from VT to styrene in Composition 3 did not significantly affect the reflective, though the visual rating was slightly higher and the gloss was 93 GU. These results show how changes in the formulation or molded temperatures can be made and still have a BMC that is capable of being directly metallized for use as a headlamp housing reflector.

In all of the above examples, it was shown that a molded BMC composition that combines a polyester resin system, particle and fiber fillers, and curing modifiers with moisture absorbing components is capable of a gloss rating of at least 85 GU at 60°, if not over 100 GU, while retaining the strict physical requirements needed for headlamp applications. This high gloss rating translates to molded articles that have low surface profiles and do not require a base coat before the metallization process. Without the base coat, the metallized surface of each composition still had a light reflectance of at least 80%. This is an improvement over other BMCs that have surface defects requiring base coating steps to impart the smoothness needed for the light reflecting region, which requires time, resources, and is more costly.

ASTM D790-03, Standard Test Methods for Flexural Properties of Unreinforced and Reinforced Plastics and Electrical Insulating Materials, ASTM International, West Conshohocken, PA, 2003.

ASTM D256-06, Method A, Standard Test Methods for Determining the Izod Pendulum Impact Resistance of Plastics, ASTM International, West Conshohocken, PA, 2006.

ASTM D638-03, Standard Test Method for Tensile Properties of Plastics, ASTM International, West Conshohocken, PA, 2014.

ASTM D2457-03, Standard Test Method for Specular Gloss of Plastic Films and Solid Plastics, ASTM International, West Conshohocken, PA, 2003.

ASTM D955-08, Standard Test Method of Measuring Shrinkage from Mold Dimensions of Thermoplastics, West Conshohocken, PA, 2014.

## Claims

1. A bulk molding compound (BMC) composition comprising:
a) a polyester resin system;
b) a curing package; and,
c) an additive package comprising moisture absorbing components,
wherein the plasticity of the BMC composition is between 1 and 6 seconds at a pressure of 90 psi (~0.62 MPa);
wherein the polyester resin system comprises an unsaturated polyester resin, a saturated polyester resin, at least one reactive diluent monomer in the unsaturated and saturated polyester resin, and at least one added reactive monomer;
wherein the at least one reactive diluent monomer is vinyl toluene and the at least one added reactive monomer is divinyl benzene; and
wherein the plasticity is measured as indicated in the description.

2. The BMC composition of claim 1, wherein the curing package comprises an inhibitor, an initiator and an accelerator.

3. The BMC composition of claim 4, wherein the curing package comprises para-benzoquinone as the inhibitor, di(*tert*-butylperoxyisopropyl)benzene as the initiator, and cobaltic acetylacetonate as the accelerator.

4. The BMC composition of claim 1, wherein the moisture adsorbing components in said additive package are selected from a group consisting of molecular sieves, silica gel, activated charcoal, calcium sulfate, and calcium chloride.

5. The BMC composition of claim 6, wherein the additive package further comprises one or more particle fillers, one or more reinforcing glass fibers fillers, an internal mold release agent, and a thickening agent.

6. An article formed from the BMC composition of claim 1, wherein said article has a gloss of at least 85 GU measured at 60° (ASTM D 2457) and a linear shrinkage between -0.4 and 0.8%.

7. The article of claim 6, wherein the article is a headlamp housing.

8. The article of claim 7, wherein the article has a gloss of at least 100 GU measured at 60°.

## Patentansprüche

1. Eine Bulk-Molding-Compound-Zusammensetzung **(BMC),** umfassend:
a) ein Polyesterharzsystem;
b) ein Härtungssystem; und
c) ein Additivpaket, das feuchtigkeitsabsorbierende Komponenten umfasst,
wobei die Plastizität der BMC-Zusammensetzung bei einem Druck von 90 psi (-0,62 MPa) zwischen 1 und 6 Sekunden liegt;
wobei das Polyesterharzsystem ein ungesättigtes Polyesterharz, ein gesättigtes Polyesterharz, mindestens ein reaktives Verdünnungsmonomer in dem ungesättigten und gesättigten Polyesterharz sowie mindestens ein zugesetztes reaktives Monomer umfasst;
wobei das mindestens eine reaktive Verdünnungsmonomer Vinyltoluol ist und das mindestens eine zugesetzte reaktive Monomer Divinylbenzol ist; und
wobei die Plastizität wie in der Beschreibung angegeben gemessen wird.

2. Die BMC-Zusammensetzung nach Anspruch 1, wobei das Härtungspaket einen Inhibitor, einen Initiator und einen Beschleuniger umfasst.

3. Die BMC-Zusammensetzung nach Anspruch 4, wobei das Härtungspaket para-Benzochinon als Inhibitor, Di(tert-butylperoxyisopropyl)benzol als Initiator und Kobaltacetylacetonat als Beschleuniger umfasst.

4. Die BMC-Zusammensetzung nach Anspruch 1, wobei die feuchtigkeitsadsorbierenden Komponenten in dem Additivpaket aus einer Gruppe ausgewählt sind, die aus Molekularsieben, Kieselgel, Aktivkohle, Calciumsulfat und Calciumchlorid besteht.

5. Die BMC-Zusammensetzung nach Anspruch 6, wobei das Additivpaket ferner einen oder mehrere Partikelfüllstoffe, einen oder mehrere verstärkende Glasfaserfüllstoffe, ein internes Formtrennmittel und ein Verdickungsmittel umfasst.

6. Ein aus der BMC-Zusammensetzung nach Anspruch 1 geformter Gegenstand, wobei der Gegenstand einen Glanz von mindestens 85 GU, gemessen bei 60° (ASTM D 2457), und eine lineare Schrumpfung zwischen -0,4 und 0,8 % aufweist.

7. Der Gegenstand nach Anspruch 6, wobei der Gegenstand ein Scheinwerfergehäuse ist.

8. Der Gegenstand nach Anspruch 7, wobei der Gegenstand einen Glanz von mindestens 100 GU, gemessen bei 60°, aufweist.

## Revendications

1. Composition **de** moulage en vrac **(BMC)** comprenant :
a) un système de résine polyester ;
b) un ensemble d'agents de durcissement ; et
c) un ensemble d'additifs comprenant des composants absorbant l'humidité,
dans laquelle la plasticité de la composition BMC est comprise entre 1 et 6 secondes à une pression de 90 psi (-0,62 MPa) ;
dans laquelle le système de résine polyester comprend une résine polyester insaturée, une résine polyester saturée, au moins un monomère diluant réactif dans la résine polyester insaturée et saturée, et au moins un monomère réactif ajouté ;
dans lequel le ou les monomères diluants réactifs sont du vinyltoluène et le ou les monomères réactifs ajoutés sont du divinylbenzène ; et
dans lequel la plasticité est mesurée comme indiqué dans la description.

2. Composition BMC selon la revendication 1, dans laquelle le système de durcissement comprend un inhibiteur, un initiateur et un accélérateur.

3. Composition BMC selon la revendication 4, dans laquelle le système de durcissement comprend de la para-benzoquinone en tant qu'inhibiteur, du di(tert-butylperoxyisopropyl)benzène en tant qu'initiateur, et de l'acétylacétonate de cobalt en tant qu'accélérateur.

4. Composition BMC selon la revendication 1, dans laquelle les composants adsorbant l'humidité contenus dans ledit ensemble d'additifs sont choisis parmi un groupe comprenant des tamis moléculaires, du gel de silice, du charbon actif, du sulfate de calcium et du chlorure de calcium.

5. Composition BMC selon la revendication 6, dans laquelle le mélange d'additifs comprend en outre une ou plusieurs charges particulaires, une ou plusieurs charges de fibres de verre de renforcement, un agent de démoulage interne et un agent épaississant.

6. Article formé à partir de la composition BMC selon la revendication 1, dans lequel ledit article présente un brillant d'au moins 85 GU mesuré à 60° (ASTM D 2457) et un retrait linéaire compris entre -0,4 et 0,8 %.

7. L'article selon la revendication 6, dans lequel l'article est un boîtier de phare.

8. L'article selon la revendication 7, dans lequel l'article présente une brillance d'au moins 100 GU mesurée à 60°.
